# EUROPÄISCHE PATENTANMELDUNG

(11) **EP 3 563 964 A1**
(43) Veröffentlichungstag der Anmeldung: **06.11.2019**
(21) Anmeldenummer: 18170551.8
(22) Anmeldetag: 03.05.2018
(51) Int. Cl.: B23K 26/00, B23K 26/362, B23K 26/03, B23K 26/60, B23F 17/00, C21D 9/32, B23K 103/04, B23K 101/00

(54) **LASERUNTERSTÜTZES HERSTELLUNGSVERFAHREN FÜR EINE GETRIEBEKOMPONENTE UND GETRIEBE**

(71) Anmelder: Flender GmbH, 46395 Bocholt (DE)
(72) Erfinder: Meis, Jean-Andre, 48249 Duelmen (DE)
(74) Vertreter: Maier, Daniel Oliver

(57) **Zusammenfassung**

Die Erfindung betrifft ein Verfahren (100) zur Herstellung einer Verzahnung (12) einer Getriebekomponente (10) aus einem Verzahnungsrohteil (25). Das Verfahren (100) umfasst einen ersten Verfahrensschritt (110), in dem ein Bereitstellen und Wärmebehandeln des Verzahnungsrohteils (25) erfolgen. In einem zweiten Verfahrensschritt (120) wird ein teilweises mechanisches Entfernen (55) einer Oxidschicht (21) auf dem Verzahnungsrohteil (25) durchgeführt. Dabei wird in zumindest einem Bereich eine Rest-Oxidschicht (23) belassen. In einem dritten Verfahrensschritt (130 erfolgt ein zumindest teilweises Entfernen der Rest-Oxidschicht (23). Erfindungsgemäßen wird im dritten Verfahrensschritt (130) die Rest-Oxidschicht (23) zumindest abschnittsweise durch einen Laser (32) bestrahlt. Die Erfindung betrifft auch ein entsprechendes Computerprogrammprodukt (80) und eine Bearbeitungsvorrichtung (70) zur Durchführung des Herstellungsverfahrens (100). Gleichermaßen betrifft die Erfindung eine Getriebekomponente 10, die nach dem erfindungsgemäßen Verfahren (100) hergestellt ist und ein Getriebe (61), das über eine entsprechende Getriebekomponente (10) verfügt.

## Beschreibung

Die Erfindung betrifft ein Herstellungsverfahren für eine Verzahnung an einer Getriebekomponente. Die Erfindung betrifft auch ein Computerprogrammprodukt und eine entsprechende Verarbeitungsvorrichtung zur Umsetzung des erfindungsgemäßen Herstellungsverfahrens. Gleichermaßen betrifft die Erfindung ein Getriebe, das über eine entsprechende Getriebekomponente verfügt.

Aus der Patentschrift US 8,628,624 B2 ist ein Verfahren zur Reinigung einer Werkstückoberfläche, insbesondere aus einer Luftfahrt-Titanlegierung, bekannt. Dabei wird mittels eines Laserstrahls eine Oberflächenverunreinigung bestrahlt. Parameter des Laserstrahls sind derart gewählt, dass eine Wechselwirkung zwischen dem Laserstrahl und einem Grundmaterial des Werkstücks minimiert ist. Ferner sind die Parameter des Laserstrahls unter Berücksichtigung von physikalischen Eigenschaften der Oberflächenverunreinigung gewählt.

In der Getriebetechnik werden stets steigende Leistungsdichten angestrebt, so dass für sämtliche Komponenten eines Getriebes steigende Anforderungen bestehen. Insbesondere wird eine stärkere Ausnutzung des eingesetzten Materials gewünscht und gleichzeitig eine schnelle und wirtschaftliche Herstellung dieser Komponenten gefordert. Es besteht Bedarf an einem Herstellungsverfahren für mechanisch leistungsfähigere Getriebekomponenten, die in einfacher Weise herstellbar sind.

Die Aufgabenstellung wird durch das erfindungsgemäße Verfahren gelöst. Das Verfahren ist dazu ausgebildet, eine Verzahnung bereitzustellen, die an einer Getriebekomponente ausgebildet ist. Die Getriebekomponente kann dabei beispielsweise als ein Hohlrad, ein Planetenrad, oder ein Sonnenritzel eines Planetengetriebes ausgebildet sein. Die Getriebekomponente kann auch als Zahnrad, also als Stirnrad oder Kegelrad, eines Stirnradgetriebes oder eines Kegelradgetriebes ausgebildet sein. Das Verfahren umfasst einen ersten Schritt, in dem ein Verzahnungsrohteil bereitgestellt wird, aus dem die Getriebekomponente herzustellen ist. Das Verzahnungsrohteil weist bereits im Wesentlichen eine angestrebte Zahnkontur auf und wird im ersten Schritt durch eine Wärmebehandlung behandelt. Die Wärmebehandlung ist dazu ausgebildet, die Härte des eingesetzten Werkstoffs zu erhöhen. Beispielsweise kann die Wärmebehandlung als Einsatzhärten und/oder Carbonitrieren ausgebildet sein. Eine solche Wärmebehandlung, wie beispielsweise Einsatzhärten umfasst ein Aufkohlen, insbesondere Gasaufkohlen, Härten und Anlassen des Verzahnungsrohteils. Durch die Wärmebehandlung wird auf einer Oberfläche des Verzahnungsrohteils eine Oxidschicht gebildet, durch die die Beanspruchbarkeit des Verzahnungsrohteils reduziert wird. In einem zweiten Verfahrensschritt erfolgt ein zumindest teilweises Entfernen der Oxidschicht auf dem Verzahnungsrohteil. Das zumindest teilweise Entfernen der Oxidschicht erfolgt durch eine mechanische Einwirkung auf das Verzahnungsrohteil. In einem Bereich des Verzahnungsrohteils, der für das mechanische Entfernen unzugänglich ist, verbleibt auf der Oberfläche des Verzahnungsrohteils eine Rest-Oxidschicht. Die Rest-Oxidschicht wird entsprechend belassen und einem weiteren Schritt unterzogen. In einem dritten Verfahrensschritt erfolgt ein zumindest teilweises Entfernen der Rest-Oxidschicht in diesem Schritt. Dazu wird das Verzahnungsrohteil abschnittsweise mit einem Laser bestrahlt und so die Rest-Oxidschicht zerstört. Optional kann zuvor die Lage der Rest-Oxidschicht erfasst werden und dem zumindest teilweisen Entfernen zugrundegelegt werden.

Der Laser, bzw. der Laserstrahl, wirken auf einer kleinen Fläche, im Wesentlichen von Durchmessern einiger Mikrometer, und erlaubt es so, auch beim Zerstören einer Oxidschicht einen Wärmeeintrag in das Verzahnungsrohteil gering zu halten. Im Rahmen dieser Anmeldung werden die Begriffe Laser und Laserstrahl im Wesentlichen synonym benutzt. Es bleibt dabei ein definierter Zustand, der durch die Wärmebehandlung im Verzahnungsrohteil hervorgerufen wird, unbeeinflusst. Darüber hinaus werden durch das Bestrahlen der Rest-Oxidschicht mit dem Laser Druckeigenspannungen erhalten, die im Verzahnungsrohteil vorliegen. Dies erlaubt es, die abträgliche Wirkung der Rest-Oxidschicht, die auch Randoxidation genannt wird, zu minimieren und gleichzeitig die vorteilhafte Wirkung der Wärmebehandlung zu erhalten. Die Rest-Oxidschicht ist schnell abschnittsweise mit dem Laser bestrahlbar, so dass diese im Wesentlichen vollständig entfernbar ist.

In einer Ausführungsform des beanspruchten Verfahrens ist der Laser dazu ausgebildet, zum Zerstören der Rest-Oxidschicht diese zu schmelzen oder zu verdampfen. Dies ist der Fall, wenn die Rest-Oxidschicht dazu ausgebildet ist, den Laser zu absorbieren und dessen Energie zumindest teilweise in Wärmeenergie umzusetzen. Alternativ, also bei bezogen auf den Laser nicht absorptionsfähigem Material der Rest-Oxidschicht, ist der Laser dazu ausgebildet, eine Grundmaterialschicht zu schmelzen oder zu verdampfen. Unter der Grundmaterialschicht ist dabei ein Bereich des Verzahnungsrohteils zu verstehen, der im Wesentlichen unmittelbar unterhalb der Rest-Oxidschicht liegt. Die Grundmaterialschicht stellt somit den Bereich des Verzahnungsrohteils dar, der unmittelbar durch die Rest-Oxidschicht bedeckt ist. Ein Wärmeeintrag durch den Laser, durch den die Grundmaterialschicht geschmolzen oder verdampft wird, erfolgt ein Abplatzen der Rest-Oxidschicht in diesem Bereich. In beiden Fällen wird durch einen reduzierten Wärmeeintrag über den Laser ein verhältnismäßig großer Abschnitt der Rest-Oxidschicht entfernt. Dies erlaubt eine hohe Prozessgeschwindigkeit beim beanspruchten Herstellungsverfahren. Ferner werden die Beeinträchtigungen an der Oberfläche des Verzahnungsrohteils gering gehalten und die oben beschriebenen Vorteile in besonderem Umfang erzielt.

Darüber hinaus kann das Herstellungsverfahren einen weiteren Verfahrensschritt umfassen, in dem mechanisches Verfestigen des Verzahnungsrohteils erfolgt. Das mechanische Verfestigen erfolgt dabei vorzugsweise in einem Bereich, der von der Rest-Oxidschicht mittels Laser gereinigt ist. Das mechanische Verfestigen ist beispielsweise als Kugelstrahlen ausgebildet. Durch das mechanische Verfestigen werden zusätzliche Eigenspannungen, insbesondere Druckeigenspannungen, an der Oberfläche des Verzahnungsrohteils eingebracht. Je geringer eine Oberfläche mit einer Rest-Oxidschicht kontaminiert, also besetzt ist, umso höher ist die Wirksamkeit eines derartigen Verfestigungsschritts. Durch das beanspruchte Herstellungsverfahren ist somit ein erhöhtes Maß ab Festigkeit bei einem Verzahnungsrohteil erzielbar. Hierdurch erlaubt das beanspruchte Verfahren eine Qualitätssteigerung bei der herzustellenden Getriebekomponente und eine effizientere Werkstoffausnutzung.

Ferner kann das mechanische Entfernen der Oxidschicht im zweiten Schritt durch ein Reinigungsstrahlen, insbesondere ein Kugelstrahlen, erfolgen. Alternativ oder ergänzend kann das zumindest teilweise mechanische Entfernen der Oxidschicht als Wasserstrahlen oder Bürsten ausgebildet sein. Reinigungsstrahlen erlaubt ein schnelles flächiges Entfernen der Oxidschicht und bietet ein Einbringen von Eigenspannungen in das Verzahnungsrohteil. Nach dem Reinigungsstrahlen verbleibt eine flächenmäßig relativ kleine Rest-Oxidschicht, die anschließen laserunterstützt zu bearbeiten ist. Die Rest-Oxidschicht verbleibt nach einem Reinigungsstrahlen unter anderem in Riefen und Rillen in der Oberfläche des Verzahnungsrohteils. Insgesamt bietet ein Reinigungsstrahlen in hohes Maß an Wirtschaftlichkeit bei der Herstellung der Getriebekomponente.

In einer weiteren Ausführungsform des beanspruchten Verfahrens ist das Verzahnungsrohteil aus einem Automatenstahl, einem Einsatzstahl, einem Vergütungsstahl, einem Nitrierstahl oder einem gehärteten Stahl hergestellt. Derartige Stähle bieten eine gute Zerspanbarkeit und sind gut durch Wärmebehandlung, insbesondere Einsatzhärten und/oder Carbonitrieren, weiterverarbeitbar. Ferner weisen derartige Stähle eine hohe Oberflächengüte und eine reduzierte Oxidationsneigung auf, so dass die Rest-Oxidschicht gering ausfällt. Hierdurch wird der Arbeitsaufwand bei der Durchführung des beanspruchten Verfahrens reduziert.

Ferner kann die Rest-Oxidschicht im beanspruchten Herstellungsverfahren eine Dicke von 10 µm bis 100 µm aufweisen. Wie Wärmebehandlung ist bezüglich ihrer Prozessparameter, wie beispielsweise der Aufkohlungstemperatur, dazu angepasst, dass eine entsprechend dicke Rest-Oxidschicht zurückbleibt. Der Laser ist derart parametriert, eine derart dicke Rest-Oxidschicht zu schmelzen oder zu verdampfen. Alternativ ist der Laser dazu parametriert, durch Schmelzen oder Verdampfen einer unmittelbar darunterliegenden Grundmaterialschicht, eine entsprechend dicke Rest-Oxidschicht abplatzen zu lassen. Die hierbei für den Laser erforderliche Energie, die nach dem Bestrahlen zumindest teilweise als Wärmeenergie im Verzahnungsrohteil vorliegt, ist derart gering, dass eine Wärmewirkung auf die Wirkung des Einsatzhärtens vernachlässigbar ist. Ferner wird durch den Laser eine entsprechende Bearbeitungstiefe erzielt, die es erlaubt, mit einer kurzen Bestrahlung die Rest-Oxidschicht zu entfernen bzw. zu zerstören. Die Dicke der Rest-Oxidschicht ist umso größer, je tiefer während der Wärmebehandlung gehärtet wird. Diese Tiefe hängt beispielsweise von der Temperatur und der Dauer der Wärmebehandlung ab. Das zumindest teilweise mechanische Entfernen der Oxidschicht im zweiten Verfahrensschritt ist dementsprechend in Abhängigkeit von den Prozessparametern der Wärmebehandlung einstellbar. Die Prozessparameter der Wärmebehandlung, der zumindest teilweisen mechanischen Entfernens der Oxidschicht und/oder die skizzierten Parameter des Lasers sind entsprechend durch eine Benutzer oder ein Computerprogrammprodukt einstellbar.

Im beanspruchten Verfahren kann die Rest-Oxidschicht im Bereich eines Zahnfußes an der herzustellenden Verzahnung ausgebildet sein. Der Zahnfuß einer Verzahnung stellt einen Bereich dar, in dem in den Lösungen nach dem Stand der Technik eine Bearbeitung, insbesondere ein Entfernen einer Rest-Oxidschicht, vermieden wird. Der Erfindung liegt unter anderem die Erkenntnis zugrunde, dass die Rest-Oxidschicht im Bereich eines Zahnfußes eine besonders abträgliche Wirkung auf die mechanische Beanspruchbarkeit einer Verzahnung hat. Durch das laserunterstützte Entfernen der Rest-Oxidschicht am Zahnfuß ist es möglich, diese abträgliche Wirkungen zu unterbinden ohne sich dabei die nachteiligen Aspekte anderer Bearbeitungstechniken einzuhandeln. Der Einsatz des beanspruchten laserunterstützten Entfernens der Rest-Oxidschicht am Zahnfuß erlaubt es, die Fußtragfähigkeit einer Verzahnung bei gleichbleibendem Materialeinsatz zu erhöhen. Dies erlaubt eine stärkere Ausnutzung des für die Verzahnung und/oder die Getriebekomponente eingesetzten Werkstoffs.

Weiter kann im beanspruchten Verfahren eine Ausrichtung des Lasers für den dritten Verfahrensschritt anhand einer vorgebbaren Sollkontur der herzustellenden Verzahnung erfolgen. Das Vorgeben erfolgt beispielsweise über die CAD-Daten der angestrebten Verzahnung. Je höher die Fertigungsqualität ist, umso geringer ist ein Unterschied zwischen einer vorliegenden Istkontur und einer angestrebten Sollkontur. Die Sollkontur als Grundlage für das Bestrahlen der Rest-Oxidschicht erfordert keine aufwendigen Erfassungsmittel zum Ermitteln einer vorliegenden Istkontur und erlaubt es, das beanspruchte Verfahren schnell und kosteneffizient durchzuführen. Alternativ kann das Ausrichten des Lasers auch anhand einer erfassten Istkontur des Verzahnungsrohteils erfolgen. Eine solche Erfassung kann beispielsweise über eine optische Vermessung erfolgen. Insbesondere kann das Erfassen der Ist-Kontur mittels des Lasers erfolgen, der auch im dritten Verfahrensschritt eingesetzt wird. Dazu wird die Intensität des Laserstrahls entsprechend angepasst, also vorzugsweise eine reduzierte Intensität eingestellt. Die Erfassung der Istkontur erlaubt es, unvorhergesehene Beeinträchtigungen des Verzahnungsrohteils zu erkennen und das beanspruchte Verfahren geeignet anzupassen. Dadurch wird ein erhöhtes Maß an Verarbeitungspräzision und eine geringere Fehlerquote bei der Herstellung der Getriebekomponenten erzielt.

Darüber hinaus kann der Laser im dritten Verfahrensschritt derart positioniert, also angeordnet sein, dass dieser beim Bestrahlen der Rest-Oxidschicht im Wesentlichen äquidistant zu einer zu bestrahlenden Zahnkontur ist. Die zu entfernende Rest-Oxidschicht liegt in der zu bestrahlenden Zahnkontur, so dass das Bestrahlen mit dem Laser durch die Äquidistanz vereinfacht wird. Insbesondere ist eine Parameteränderung, wie beispielsweise ein Verändern eines Fokuspunktes des Lasers, damit entbehrlich. Somit kann im Wesentlichen mit einer gleichbleibenden Parametrierung des Lasers ein großer Abschnitt der Zahnkontur mit dem Laser abgefahren, und so von der Rest-Oxidschicht gereinigt werden. Dies erlaubt eine schnelle und effiziente Durchführung des beanspruchten Herstellungsverfahrens. Bei einer entlang einer Zahnbreite konstanten Zahnkontur kann der Laser im Wesentlichen linear entlang der Zahnbreite bewegt werden und so die Bestrahlung auch von großflächigen Zahnkonturen beschleunigt durchgeführt werden. Das beanspruchte Verfahren ist somit skalierbar und für eine breite Spanne an Getriebegrößen einsetzbar.

Ferner kann im beanspruchten Herstellungsverfahren das Verzahnungsrohteil während des dritten und vierten Schritts, also beim Bestrahlen mit dem Laser und dem mechanischen Verfestigen, durchgehend in der gleichen Einspannung aufgenommen ist. Die Verfahrensschritte des Laser-Bestrahlens und des mechanischen Verfestigens können so schnell hintereinander mit reduziertem Arbeitsaufwand durchgeführt werden. Das beanspruchte Verfahren ist somit in einfacher Form durchführbar.

Die zugrundeliegende Aufgabenstellung wird auch durch das erfindungsgemäße Computerprogrammprodukt gelöst, das zu einer remanenten Speicherung und Ausführung in einem Speicher einer Steuereinheit ausgebildet ist. Das Computerprogrammprodukt kann dabei sämtliche Funktionen in sich vereinen, also monolithisch aufgebaut sein. Das Computerprogrammprodukt kann als Software ausgebildet sein und/oder festverdrahtet ausgebildet sein. Unter einer Festverdrahtung ist beispielsweise die Bereitstellung des Computerprogrammprodukts als Anwendungsspezifische Integrierte Schaltung, kurz ASIC, oder als System von FPGAs zu verstehen. Alternativ kann das Computerprogrammprodukt auch in Funktionssegmente unterteilt sein, die eigenständig speicherbar und ausführbar sind und funktionell miteinander zusammenwirken. Die Steuereinheit kann als einzelne Steuerbox, als Computer, oder als übergeordnete Steuereinheit an einem entfernten Ort, beispielsweise als Computer-Cloud ausgebildet sein. Das Computerprogrammprodukt ist dazu ausgebildet, Parameter zum Betrieb eines Lasers vorzugeben und somit den Laser durch Ausgeben von Befehlen zu steuern. Parameter zum Betrieb des Lasers können beispielsweise dessen Ausrichtung, eine Intensität, eine Fokuspunkt-Entfernung, eine Pulsweite, oder weitere oben skizzierte Parameter sein. Ebenso kann das Computerprogrammprodukt dazu ausgebildet sein, eine Einspannung, in der sich das Verzahnungsrohteil während des Verfahrens befindet zu bewegen um so unterschiedliche Abschnitte des Verzahnungsrohteils zu bearbeiten. Das Computerprogrammprodukt ist dazu ausgebildet, einen Laser in einem Herstellungsverfahren gemäß zumindest einer der oben skizzierten Ausführungsformen in geeigneter Weise anzusteuern. Durch das erfindungsgemäße Computerprogrammprodukt wird eine einfache und schnell anpassbare Umsetzung des Herstellungsverfahrens gewährleistet.

Die skizzierte Aufgabe wird auch durch die erfindungsgemäße Vorrichtung zum Bearbeiten eines Verzahnungsrohteils gelöst. Die Vorrichtung dient zur Herstellung einer Verzahnung eines Hohlrads, eines Planetenrads, einer Sonnenwellenverzahnung, oder eines Zahnrads eines Stirngetriebes oder eines Kegelradgetriebes. Dazu umfasst die Vorrichtung eine Spannvorrichtung, die dazu ausgebildet ist, für das Verzahnungsrohteil eine lösbare Fixierung bereitzustellen. Die Vorrichtung weist auch eine erste Werkzeugeinheit auf, die zu einem mechanischen Entfernen einer Oxidschicht ausgebildet ist, die auf dem Verzahnungsrohteil während einer Wärmebehandlung gebildet wird. Die erste Werkzeugeinheit kann dazu beispielsweise als Kugelstrahl-Einrichtung ausgebildet sein. Die Vorrichtung umfasst auch eine Laser-Einheit, die zu einem zumindest abschnittsweisen Bestrahlen des Verzahnungsrohteils ausgebildet ist. Die Laser-Einheit weist dazu einen Laser auf, der in puncto Ausrichtung, Intensität, Fokuspunkt-Entfernung, und/oder Pulsweite von einem Benutzer oder einem Computerprogrammprodukt einstellbar, und damit ansteuerbar ausgebildet ist. Das zumindest abschnittsweise Bestrahlen des Verzahnungsrohteils dient dazu, eine im entsprechenden Abschnitt vorliegende Rest-Oxidschicht zumindest teilweise zu entfernen. Die Vorrichtung verfügt über eine Steuereinheit, die dazu ausgebildet ist, ein Computerprogrammprodukt remanent in einem Speicher zu speichern und auszuführen. Das Computerprogrammprodukt ist dazu ausgebildet, durch entsprechende Ansteuerung zumindest einer Komponente der Vorrichtung, insbesondere der Laser-Einheit, eines der oben dargestellten Herstellungsverfahren auf der erfindungsgemäßen Vorrichtung umzusetzen. Die Komponenten der Vorrichtung, beispielsweise die Spannvorrichtung, die erste Werkzeugeinheit und/oder die Laser-Einheit, können baulich in die Vorrichtung integriert oder als interagierende Module ausgebildet sein. Unter interagierenden Modulen sind beispielsweise Industrieroboter zu verstehen, die zusammenwirken.

Ebenso wird die Aufgabe durch eine erfindungsgemäße Getriebekomponente gelöst. Die Getriebekomponente umfasst einen Grundkörper, der mit einer Verzahnung versehen ist. Die Getriebekomponente kann als Hohlrad, Planetenrad oder Sonnenwelle eines Planetengetriebes ausgebildet sein. Alternativ kann die Getriebekomponente auch als Zahnrad eines Stirnradgetriebes oder eines Kegelradgetriebes ausgebildet sein. Erfindungsgemäß ist die Verzahnung der Getriebekomponente mittels eines Verfahrens nach zumindest einer der oben beschriebenen Ausführungsformen hergestellt. Eine derartige Getriebekomponente bietet ein höheres Maß an Festigkeit und erlaubt so eine stärkere Werkstoffausnutzung. Dies erlaubt auch eine gewichtsparende Konstruktion der Getriebekomponente.

Gleichermaßen wird die skizzierte Aufgabenstellung durch ein erfindungsgemäßes Getriebe gelöst. Das Getriebe kann als Planetengetriebe, als Stirnradgetriebe oder als Kegelradgetriebe ausgebildet sein. Das Getriebe weist mindestens eine Getriebekomponente auf, die gemäß der oben beschriebenen erfindungsgemäßen Getriebekomponente ausgebildet ist, also nach zumindest einer Ausführungsform des beanspruchten Herstellungsverfahrens, hergestellt ist.

Die Erfindung wird im Folgenden anhand einzelner Ausführungsformen beschrieben. Die Merkmale der einzelnen Ausführungsformen sind dabei untereinander kombinierbar. Die Figuren sind insoweit in gegenseitiger Ergänzung zu lesen, dass gleiche Bezugszeichen in den Figuren auch die gleiche technische Bedeutung haben. Es zeigt im Einzelnen:
- FIG 1: eine schematische mikroskopische Schnittansicht einer Oberfläche eines Verzahnungsrohteils zwischen zwei Verfahrensschritten;
- FIG 2: eine schematische Ansicht eines Verzahnungsrohteils während eines dritten Verfahrensschritts gemäß einer ersten Ausführungsform des beanspruchten Verfahrens;
- FIG 3: eine schematische Ansicht eines Verzahnungsrohteils während eines dritten Verfahrensschritts gemäß einer zweiten Ausführungsform des beanspruchten Verfahrens;
- FIG 4: eine schematische mikroskopische Schnittansicht einer Oberfläche eines Verzahnungsrohteils während des dritten Verfahrensschritts;

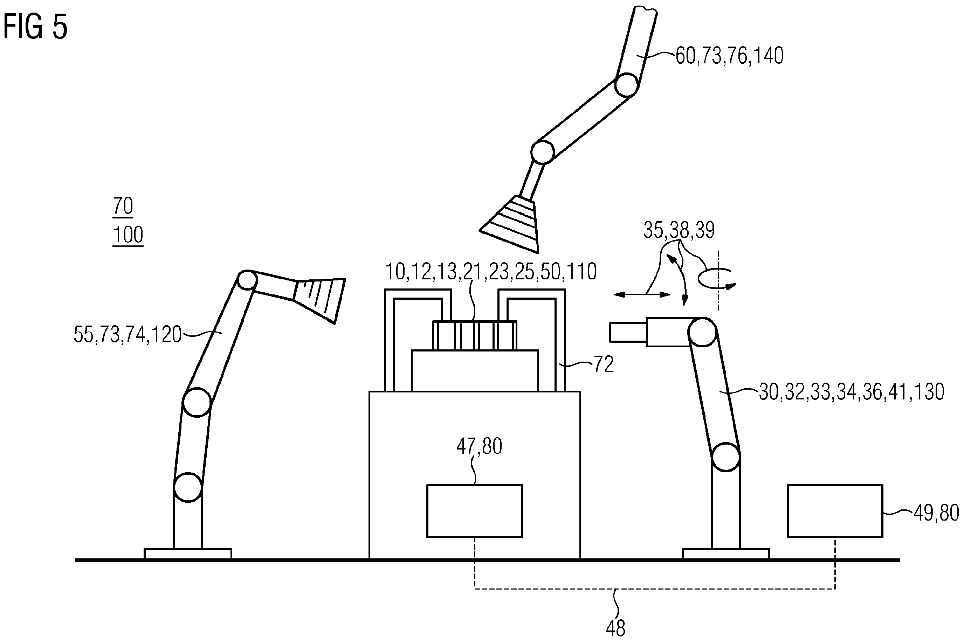

- FIG 5: einen schematischen Aufbau einer beanspruchten Bearbeitungsvorrichtung;
- FIG 6: ein Ablaufdiagramm einer weiteren Ausführungsform des beanspruchten Verfahrens.

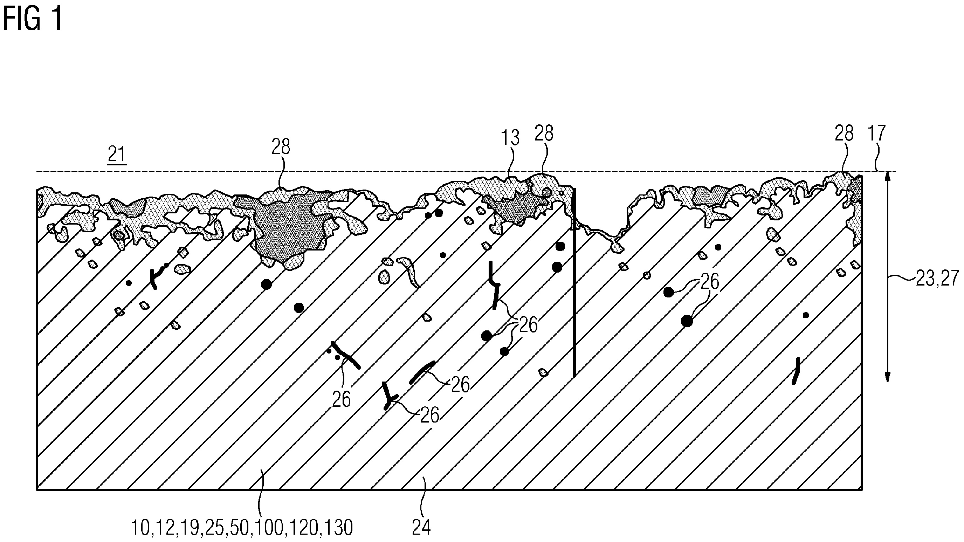

FIG 1 zeigt schematisch eine Schnittansicht einer Oberfläche 13 eines Verzahnungsrohteils 25, das zu einer Getriebekomponente 10 zu verarbeiten ist. Die in FIG 1 gezeigte Oberfläche 13 liegt gehört zu einer Verzahnung 12, die im Zuge eines beanspruchten Verfahrens 100 herzustellen ist. Die Getriebekomponente 10 weist eine Grundmaterialschicht 24 auf, die sich im Wesentlichen im Inneren des Verzahnungsrohteils 25 befindet. Die Grundmaterialschicht 25 ist aus einem metallischen Werkstoff, beispielsweise einem Automatenstahl, einem Einsatzstahl, einem Vergütungsstahl, einem Nitrierstahl oder einem gehärteten Stahl hergestellt. Durch einen vorhergehenden ersten Verfahrensschritt 110 sind durch eine Wärmebehandlung 50, die als Einsatzhärten 50 ausgebildet ist, Druckeigenspannungen 19 im Verzahnungsrohteil 25 eingebracht. Alternativ können auch andere Formen der Wärmebehandlung eingesetzt werden. Auf der Grundmaterialschicht 24 ist eine Rest-Oxidschicht 23 ausgebildet, die nach einem teilweisen Entfernen einer nicht dargestellten Oxidschicht 21 an der Oberfläche 13 zurückbleibt. Das Verzahnungsrohteil 25 befindet sich in FIG 1 zwischen einem zweiten Verfahrensschritt 120, in dem die Oxidschicht 21 bereits teilweise entfernt wird, und einem dritten Verfahrensschritt 130, in dem die Rest-Oxidschicht 23 behandelt wird. Die Rest-Oxidschicht 23 wird im Wesentlichen durch Oxid-Einschlüsse 26 gebildet, die sich im Bereich der Oberfläche 13 befinden. Gemessen an einer Oberflächen-Bezugsebene 17, die im Bereich der höchsten Rauhigkeitsstellen 28 der Oberfläche 13 liegt, befinden sich die Oxid-Einschlüsse 26 in einer Tiefe von 10µ bis 100pm im Verzahnungsrohteil 25. Dadurch wird die mit einem Doppelpfeil dargestellte Schichtdicke 27 der Rest-Oxidschicht 23 definiert. Zusätzlich kann die Oxidschicht 21 auch eine rissartige Struktur aufweisen.

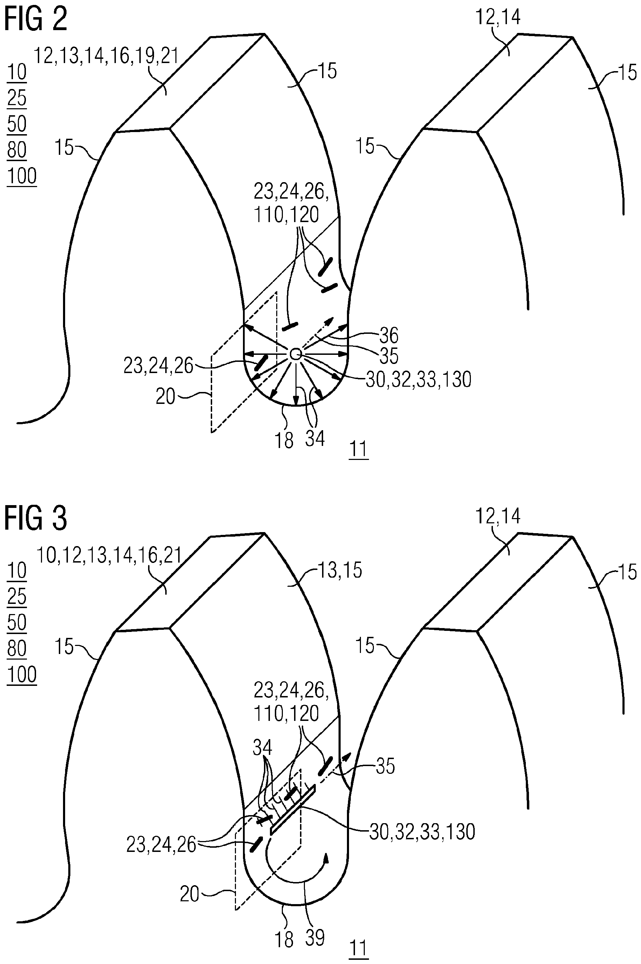

In FIG 2 ist schematisch ein Abschnitt eines Verzahnungsrohteils 25 dargestellt, das zu einer Getriebekomponente 10, nämlich einem Zahnrad 16, zu verarbeiten ist. Das Verzahnungsrohteil 25 weist einen Grundkörper 11 auf, auf dem die Verzahnung 12 auszubilden ist. Das Verarbeiten erfolgt dabei gemäß einer ersten Ausführungsform des beanspruchten Herstellungsverfahrens 100. Das Verzahnungsrohteil 25 weist eine Verzahnung 12 mit einer Mehrzahl an Zähnen 14 auf, die in vorherigen Schritten des beanspruchten Herstellungsverfahrens 100 behandelt wurden. Nach einer Wärmebehandlung 50, insbesondere einem Einsatzhärten 50 in einem ersten Verfahrensschritt 110 und einem teilweisen Entfernen einer dabei gebildeten Oxidschicht 21 an der Oberfläche 13 in einem zweiten Verfahrensschritt 120 liegt an einer Zahnflanke 15 im Bereich eines Zahnfußes 18 eine Rest-Oxidschicht 23 vor. Die Rest-Oxidschicht 23 weist Oxid-Einschlüsse 26 auf, die in der Oberfläche 13 aufgenommen sind. Während des in FIG 2 dargestellten dritten Verfahrensschrittes 130 erfolgt ein Bestrahlen eines Bearbeitungsbereichs 20 auf der Oberfläche 13 des Verzahnungsrohteils 25. Das Bestrahlen erfolgt durch einen Laser 32, der einer Laser-Einheit 30 zugeordnet ist. Der Laser 32 richtet dazu Laserstrahlen 33 auf den Bearbeitungsbereich 20, in dem sich eine Rest-Oxidschicht 23 befindet. Durch das Bestrahlen mit dem Laser 32 werden Oxid-Einschlüsse 26 zum Schmelzen und/oder Verdampfen gebracht. Dabei kann auch Material aus der Grundmaterialschicht 24 mit geschmolzen oder verdampft werden. Der Laser 32 ist zumindest in puncto Intensität 33 durch einen Benutzer oder ein nicht näher dargestelltes Computerprogrammprodukt 80 steuerbar. Der Laser 32 ist entlang einer Kontur des Zahnfußes 18 bzw. der Zahnflanken 15 beweglich. Durch eine entsprechende Bearbeitungsbewegung 35 sind die Zahnflanken 15 und der Zahnfuß 18 abschnittsweise, also in mehreren Bearbeitungsbereichen 20, durch den Laser 32 bestrahlbar. Durch das Bestrahlen mit dem Laser 32 wird so die Rest-Oxidschicht 23 zumindest teilweise entfernt. Diese Bestrahlen mit dem Laser 32 erlaubt es, der festigkeitsreduzierenden Wirkung der Oxid-Einschlüsse 26 entgegenzuwirken und dabei eine im Verzahnungsrohteil 25 vorliegende Druckeigenspannungen 19 erhalten. Der Laser 32 ist im Wesentlichen äquidistant zu den Zahnflanken 15 und dem Zahnfuß 18 positioniert. Durch eine einfache, im Wesentlichen lineare Bewegung des Lasers 32 ist ein großer Bereich des Verzahnungsrohteils 25 mit gleichbleibender Einstellung des Lasers 32 bestrahlbar. Insbesondere erfolgt das Bestrahlen der Oberfläche 13 bei der Bearbeitungsbewegung 35 mit einer gleichbleibenden Fokuspunkt-Entfernung 36. Hierdurch wird eine schnelle Fertigung ermöglicht.

Eine zweite Ausführungsform des dritten Verfahrensschritts 130 im beanspruchten Herstellungsverfahren 100 ist in FIG 3 schematisch abgebildet. Dabei haben gleiche Bezugszeichen in FIG 3 die gleiche technische Bedeutung wie in FIG 2. Gemäß der Ausführungsform nach FIG 3 werden die Laserstrahlen 34 im Bearbeitungsbereich 20 im Wesentlichen linienförmig auf die Oberfläche 13 gerichtet. Zusätzlich zu einer Bearbeitungsbewegung 35 entlang des Zahnfußes 18 erfolgt eine Schwenkbewegung 39 des Lasers 32. Während der Schwenkbewegung 39 ist aufgrund einer bekannten Kontur der Oberfläche 13 im Bereich der Zahnflanken 15 und des Zahnfußes 18 eine einfache Anpassung der Einstellung des Lasers 32, insbesondere der Fokuspunkt-Entfernung 36, möglich. Dies erlaubt eine vorteilhafte Anpassung des Lasers 32 an die Form des zu bearbeitenden Verzahnungsrohteils 25 und bietet ein besonders gründliches Entfernen der Rest-Oxidschicht 23. Dies wird entsprechend abschnittsweise für eine Mehrzahl an Bearbeitungsbereichen 20 wiederholt.

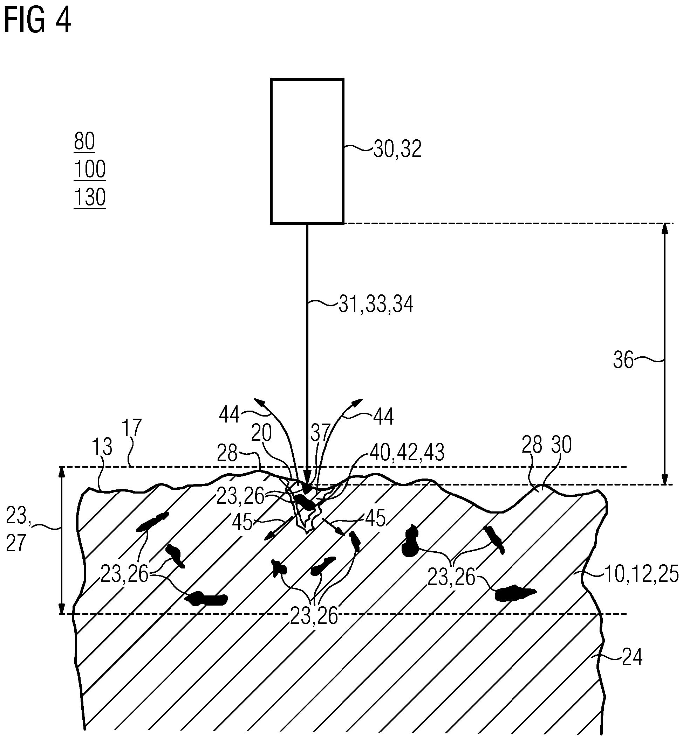

In FIG 4 ist schematisch eine Schnittansicht einer Ausführungsform des dritten Verfahrensschritts 130 im beanspruchten Herstellungsverfahren 100 dargestellt. Insbesondere zeigt FIG 4 detailliert den Ablauf des dritten Verfahrensschritts 130, bei dem die Oberfläche 13 mit einem Laser 32 einer Laser-Einheit 30 bestrahlt wird. Der dritte Verfahrensschritt 130 erfolgt in einem Bearbeitungsbereich 20, in dem die Oberfläche 130 einer Verzahnung 12 an einem Verzahnungsrohteil 25 bearbeitet wird. Das Verzahnungsrohteil 25 ist dabei insbesondere eine Getriebekomponente 10. Ein Laserstrahl 34 wird mit einer wählbaren Intensität 33 auf die Oberfläche 13 gerichtet, an der zumindest abschnittsweise eine Rest-Oxidschicht 23 ausgebildet ist. Die Rest-Oxidschicht 23 umfasst eine Mehrzahl an Oxid-Einschlüssen 26, die sich in einer Grundmaterialschicht 24 angeordnet sind. Die Lage der Oxid-Einschlüsse 26 definiert eine Schichtdicke 27, die auf eine Bezugsebene 17 bezogen ist und so gewählt ist, dass die an der Oberfläche 13 vorliegenden Rauhigkeitsstellen 28 von der Bezugsebene 17 eingehüllt sind. Die Schichtdicke 27 beträgt zwischen 10pm und 100pm. Die Grundmaterialschicht 24 ist unterhalb der Rest-Oxidschicht 23 frei von Oxid-Einschlüssen 26 und im Bereich der Rest-Oxidschicht 23 mit Oxid-Einschlüssen 26 teilweise durchsetzt.

Der Laserstrahl 34 ist mit einer wählbaren Intensität 33 auf ein Oberflächenfragment 40 gerichtet, an dem sich der Fokuspunkt 37 des Laserstrahls 34 befindet. Die Lage des Fokuspunkts 37 ist unter anderem durch eine Einstellung einer Fokuspunkt-Entfernung 36 wählbar. Durch den Laser 32 wird so dem Oberflächenfragment 40 Energie zugeführt, die dort in Wärmeenergie 43 umgewandelt wird. Die Zufuhr der Wärmeenergie 43 wird zumindest teilweise eine Verdampfung 42 des Oberflächenfragments 40 hervorgerufen. Verbleibende Stücke des Oberflächenfragments 40 werden bei zumindest teilweisen Verdampfen 42 durch die entstehenden Drücke mechanisch entfernt. Es erfolgt dabei ein Abplatzen 44 von nicht verdampften Stücken des Oberflächenfragments 40. Darüber hinaus wird das Verdampfen 42 und Abplatzen 44 des Oberflächenfragments 40 durch eine vom Benutzer und/oder einem Computerprogrammprodukt 80 wählbare Bestrahlungsdauer 31 einstellbar. Der Wärmeeintrag 45 durch den Laserstrahl 34 von zu entfernenden Oberflächenfragment 40 in die Grundmaterialschicht 24 wird reduziert, in dem das Verdampfen 42 und Abplatzen 44 einem kurzen Zeitraum erfolgt. Dementsprechend sind zumindest die Bestrahlungsdauer 31, die Intensität 33 und die Fokuspunkt-Entfernung 36 entsprechend gewählt, dass ein zumindest teilweises Verdampfen 42 und Abplatzen 44 des Oberflächenfragments 40 im Verfahrensschritt 130 in möglichst kurzer Dauer bei minimalem Energieeinsatz des Lasers 34 zuverlässig erfolgt.

Ein schematischer Aufbau einer Ausführungsform einer erfindungsgemäßen Bearbeitungsvorrichtung 70 abgebildet, die dazu ausgebildet ist, zumindest eine Ausführungsform des beanspruchten Herstellungsverfahrens 100 durchzuführen. Die Bearbeitungsvorrichtung 70 umfasst eine Spannungsvorrichtung 72, in der ein Verzahnungsrohteil 25 während des Herstellungsverfahrens 100 eingespannt ist. Am Verzahnungsrohteil 25 wird mittels der Bearbeitungsvorrichtung 70 eine Verzahnung 12 bearbeitet, um so aus dem Verzahnungsrohteil 25 eine Getriebekomponente 10 herzustellen. Im Zuge eines ersten Verfahrensschritts 110 wird das Verzahnungsrohteil 25, das einsatzgehärtet ist, in der Spannvorrichtung 72 eingespannt. Die Bearbeitungsvorrichtung 25 umfasst eine erste Werkzeugeinheit 74, die als Kugelstrahlanlage 73 ausgebildet ist. Die erste Werkzeugeinheit 74 ist dazu eingerichtet, in einem zweiten Verfahrensschritt 120 eine Oxidschicht 21, die bei einer Wärmebehandlung 50, wie beispielsweise Einsatzhärten 50, entsteht, teilweise mechanisch zu entfernen. Nach dem teilweisen mechanischen Entfernen 55 verbleibende Reste der Oxidschicht 21 bilden eine Rest-Oxidschicht 23. Die Rest-Oxidschicht 23 wird in einem dritten Verfahrensschritt 130 von einer Laser-Einheit 30 zumindest teilweise entfernt. Dazu umfasst die Laser-Einheit 30 einen Laser 32, der zum Ausstrahlen eines Laserstrahls 34 ausgebildet ist. Die Laser-Einheit 30 ist dazu ausgebildet, entlang einer Mehrzahl an Bewegungsachsen 38 bewegt zu werden umso beispielsweise eine angestrebte Ausrichtung 41 und/oder eine Schwenkbewegung 39 des Lasers 32 umzusetzen und den Laser 32 entlang der Richtung einer angestrebten Bearbeitungsbewegung 35 zu führen. Darüber hinaus ist der Laserstrahl 34, der vom Laser 32 emittiert wird, zumindest in puncto Intensität 33, Fokuspunkt-Entfernung 36 und Bestrahlungsdauer 31 einstellbar. Das Einstellen erfolgt durch eine Eingabe eines Benutzers und/oder durch ein Computerprogrammprodukt 80, durch das unter anderem die Laser-Einheit 30 gesteuert wird.

Ferner umfasst die Bearbeitungsvorrichtung 70 eine zweite Werkzeugeinheit 76, die als Kugelstrahlanlage 73 ausgebildet ist. Die zweite Werkzeugeinheit 76 ist dazu vorgesehen, in einem vierten Verfahrensschritt 140 das Verzahnungsrohteil 25 zu bearbeiten und so ein mechanisches Verfestigen 60 der Oberfläche 13 des Verzahnungsrohteils 25 herbeizuführen. Die Bearbeitungsvorrichtung 70 umfasst auch eine erste Steuereinheit 47, die der Bearbeitungsvorrichtung 70 unmittelbar zugeordnet ist. In der ersten Steuereinheit 47 ist ein Computerprogrammprodukt 80 remanent gespeichert und wird dort ausgeführt. Das Computerprogrammprodukt 80 ist dazu ausgebildet, zumindest teilweise das beanspruchte Herstellungsverfahren 100 umzusetzen. Dazu sind die erste Werkzeugeinheit 74, die zweite Werkzeugeinheit 76 und/oder die Laser-Einheit 30 durch das Computerprogrammprodukt 80 ansteuerbar und/oder regelbar. Die erste Steuereinheit 47 ist über eine Datenverbindung 48 mit einer zweiten Steuereinheit 49 verbunden, auf der auch ein Computerprogrammprodukt 80 remanent gespeichert ist und auf der zweiten Steuereinheit 49 ausführbar ist. Die Computerprogrammprodukte 80 in der ersten und zweiten Steuereinheit 47, 49 sind zu einem Kommunizieren über die Datenverbindung 48 ausgebildet. Einzelne Funktionen des Herstellungsverfahrens, wie beispielsweise einzelne Verfahrensschritte 110, 120, 130, 140, oder Eingaben von Parametern, wie beispielsweise Bestrahlungsdauer 31 und/oder Intensität 33 des Laserstrahls 34, sind getrennt auf den beiden Steuereinheiten 47, 49 umsetzbar. Durch die Datenverbindung 48 wird im Zusammenspiel der ersten und zweiten Steuereinheit 47, 49 zumindest eine Ausführungsform des beanspruchten Herstellungsverfahrens 100 mit der Bearbeitungsvorrichtung 70 verwirklicht.

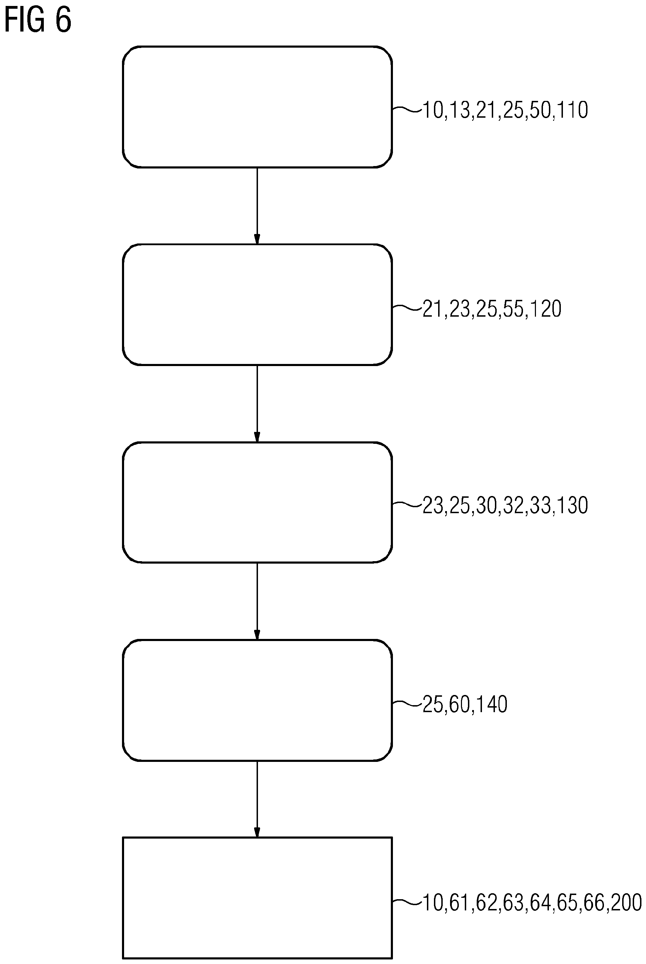

FIG 6 zeigt schematisch den Ablauf einer Ausführungsform der beanspruchten Herstellungsverfahrens 100. Das Herstellungsverfahren 100 umfasst einen ersten Verfahrensschritt 110, in dem ein Verzahnungsrohteil 25 bereitgestellt wird, das zu einer Getriebekomponente 10 zu verarbeiten ist. Das Verzahnungsrohteil 25 befindet sich im Verfahrensschritt 110 im Zustand nach einem Einsatzhärten 50 und weist an seiner Oberfläche 31 eine Oxidschicht 21 auf. Es folgt ein zweiter Verfahrensschritt 120, in dem ein zumindest teilweises mechanisches Entfernen 55 der Oxidschicht 21 mittels einer ersten Werkzeugeinheit 74 erfolgt. Durch den zweiten Verfahrensschritt 120 verbleibt von der Oxidschicht 21 noch eine Rest-Oxidschicht 23 auf dem Verzahnungsrohteil 25. Es schließt sich ein dritter Verfahrensschritt 130 an, in dem die Rest-Oxidschicht 23 durch Einsatz einer Laser-Einheit 30 zumindest teilweise entfernt wird. Durch die Laser-Einheit 30 wird ein Laser 32 auf das Verzahnungsrohteil 25 gerichtet, dessen Intensität 33 durch eine Vorgabe eines Benutzers und/oder eines Computerprogrammprodukts 80 einstellbar ist. Das Verfahren 100 umfasst ferner einen vierten Verfahrensschritt 140, in dem mittels einer zweiten Werkzeugeinheit 76 ein mechanisches Verfestigen 60 an der Oberfläche des Verzahnungsrohteils 25 erzielt wird. Auf den vierten Verfahrensschritt 140 folgt ein Endzustand 200 des Herstellungsverfahrens 100. Im Endzustand 200 wird das Verzahnungsrohteil 25 als Getriebekomponente 10 entnommen. Die Getriebekomponente 10 kann dabei auch zu einer weiteren Bearbeitung vorgesehen sein. Durch das Verfahren 100 nach FIG 6 sind Hohlräder 62, Planetenräder 62, und Sonnenritzel 64 für Getriebe 61, insbesondere, Planetengetriebe 67 herstellbar. Gleichermaßen sind mit dem beschriebenen Verfahren 100 auch Zahnräder 16 für Stirnradgetriebe 65 oder Kegelradgetriebe 66 herstellbar.

## Patentansprüche

1. Verfahren (100) zur Herstellung einer Verzahnung (12) einer Getriebekomponente (10) aus einem Verzahnungsrohteil (25), umfassend die Schritte:
a) Bereitstellen und Wärmebehandlung des Verzahnungsrohteils (25);
b) Teilweises mechanisches Entfernen (55) einer Oxidschicht (21) auf dem Verzahnungsrohteil (25) und in zumindest einem Bereich ein Belassen einer Rest-Oxidschicht (23);
c) Zumindest teilweises Entfernen der Rest-Oxidschicht (23) ;
wobei im Schritt c) die Rest-Oxidschicht (23) zumindest abschnittsweise durch einen Laser (32) bestrahlt wird.

2. Verfahren (100) zur Herstellung einer Verzahnung (12) nach Anspruch 1, **dadurch gekennzeichnet, dass** der Laser (32) zu einem Schmelzen und/oder Verdampfen (42) der Rest-Oxidschicht (32) oder einer Grundmaterialschicht (24) ausgebildet ist, die unmittelbar durch die Rest-Oxidschicht (23) bedeckt ist.

3. Verfahren (100) zur Herstellung einer Verzahnung (12) nach Anspruch 1 oder 2, **dadurch gekennzeichnet, dass** in einem weiteren Schritt d) ein mechanisches Verfestigen (60) des Verzahnungsrohteils (25) erfolgt.

4. Verfahren (100) zur Herstellung einer Verzahnung (12) nach einem der Ansprüche 1 bis 3, **dadurch gekennzeichnet, dass** das mechanische Entfernen (55) der Oxidschicht (23) als Reinigungsstrahlen, insbesondere als Kugelstrahlen, Wasserstrahlen und/oder Bürsten ausgebildet ist.

5. Verfahren (100) zur Herstellung einer Verzahnung (12) nach einem der Ansprüche 3 oder 4, **dadurch gekennzeichnet, dass** das Verzahnungsrohteil (25) aus einem Automatenstahl, einem Einsatzstahl, einem Vergütungsstahl, einem Nitrierstahl oder einem gehärteten Stahl hergestellt ist.

6. Verfahren (100) zur Herstellung einer Verzahnung (12) nach einem der Ansprüche 1 bis 5, **dadurch gekennzeichnet, dass** die Rest-Oxidschicht (23) als Randoxidation ausgebildet ist, und eine Dicke (27) von 10 µm bis 100 µm aufweist.

7. Verfahren (100) zur Herstellung einer Verzahnung (12) nach einem der Ansprüche 1 bis 6, **dadurch gekennzeichnet, dass** die Rest-Oxidschicht (23) im Bereich eines Zahnfußes (18) ausgebildet ist.

8. Verfahren (100) zur Herstellung einer Verzahnung (12) nach einem der Ansprüche 1 bis 7, **dadurch gekennzeichnet, dass** eine Ausrichtung (41) des Lasers (32) im Schritt c) anhand einer Sollkontur der herzustellenden Verzahnung (12) oder anhand einer erfassten Istkontur des Verzahnungsrohteils (25) erfolgt.

9. Verfahren (100) zur Herstellung einer Verzahnung (12) nach einem der Ansprüche 1 bis 8, **dadurch gekennzeichnet, dass** der Laser (32) im Schritt c) äquidistant zu einer zu bestrahlenden Zahnkontur angeordnet ist.

10. Verfahren (100) zur Herstellung einer Verzahnung () nach einem der Ansprüche 3 bis 9, **dadurch gekennzeichnet, dass** das Verzahnungsrohteil (25) während der Schritte c) und d) in der gleichen Einspannung in einer Spannvorrichtung (72) verbleibt.

11. Computerprogrammprodukt (80) zur Speicherung und Ausführung in einem Speicher einer Steuereinheit (47, 49), das dazu ausgebildet ist, eine Ausrichtung(41), eine Intensität(33) und/oder einen Fokuspunkt (37) eines Laser (32) vorzugeben, **dadurch gekennzeichnet, dass** das Computerprogrammprodukt (80) zur Durchführung eines Verfahrens (100) nach zumindest einem der Ansprüche 1 bis 10 ausgebildet ist.

12. Vorrichtung (70) zum Bearbeiten eines Verzahnungsrohteils (25), umfassend eine Spannvorrichtung (72) zur Fixierung des Verzahnungsrohteils (25), eine erste Werkzeugeinheit (74), die zu einem mechanischen Entfernen (55) einer Oxidschicht (21) auf dem Verzahnungsrohteil (25) ausgebildet ist, eine Laser-Einheit (30) zum zumindest abschnittsweisen Bestrahlen des Verzahnungsrohteils (25), und eine Steuereinheit (47, 49) mit einem Speicher zur Speicherung und Ausführung eines Computerprogrammprodukts (80), **dadurch gekennzeichnet, dass** das auf der Steuereinheit (47, 49) ein Computerprogrammprodukt (80) nach Anspruch 11 gespeichert ist.

13. Getriebekomponente (10), umfassend einen Grundkörper (11), der mit einer Verzahnung (12) versehen ist, und als Hohlrad (62), Planetenrad (63) oder Sonnenritzel (64) eines Planetengetriebes (67) oder als Zahnrad (16) eines Stirnradgetriebes (65) oder Kegelradgetriebes (66) ausgebildet ist, **dadurch gekennzeichnet, dass** die Verzahnung (12) nach einem Verfahren (100) gemäß einem der Ansprüche 1 bis 10 hergestellt ist.

14. Getriebe (61), das als Planetengetriebe (67), als Stirnradgetriebe (65) oder Kegelradgetriebe (66) ausgebildet ist, und zumindest eine Getriebekomponente (10) aufweist, **dadurch gekennzeichnet, dass** die Getriebekomponente (10) nach Anspruch 13 ausgebildet ist.
